Europäisches Patentamt

(19) European Patent Office

Office européen des brevets

(11) Publication number : **0 453 972 B1**

(12) **EUROPEAN PATENT SPECIFICATION**

(45) Date of publication of patent specification :
09.02.94 Bulletin 94/06

(51) Int. Cl.⁵ : **A23L 3/34,** A23L 3/3571,
A23L 3/3463

(21) Application number : **91106272.7**

(22) Date of filing : **19.04.91**

(54) **Use of lanthionines for control of post-processing contamination in food.**

(30) Priority : **23.04.90 US 513252**
**16.04.91 US 684402**

(43) Date of publication of application :
**30.10.91 Bulletin 91/44**

(45) Publication of the grant of the patent :
**09.02.94 Bulletin 94/06**

(84) Designated Contracting States :
**AT BE CH DE DK ES FR GB GR IT LI LU NL SE**

(56) References cited :
**EP-A- 0 384 319**
**WO-A-89/12399**
**GB-A- 2 141 016**
**US-A- 4 597 972**

(73) Proprietor : **HAARMANN & REIMER CORP.**
**70 Diamond Road, P.O.Box 175**
**Springfield, New Jersey 07081 (US)**

(72) Inventor : **Collison, Mark W.**
**52140 Arrowhead Circle**
**Granger, IN 46530 (US)**
Inventor : **Farver, Terry F.**
**53719 Kershner Lane**
**Elkhart, IN 46514 (US)**
Inventor : **Herald, Paula J.**
**1725 Dellwood Avenue**
**St. Paul, MN 55113 (US)**
Inventor : **McDonald, Christine A.**
**54567 CR 101 N**
**Elkhart, IN 46514 (US)**
Inventor : **Monticello, Daniel J.**
**721 Violet Road**
**Elkhart, IN 46514 (US)**

(74) Representative : **Petrovicki, Wolfgang, Dr. et al**
**Bayer AG Konzernverwaltung RP Patente**
**Konzern**
**D-51368 Leverkusen 1 (Bayerwerk) (DE)**

EP 0 453 972 B1

## Description

### Background of the Invention

Chung et al., 1989 App. Env. Microbiol. 55: (6) 1329-1333 discuss the treatment of uncooked meats by soaking in a nisin solution and the effect of a nisin dip on raw meat inoculated previously with certain bacteria. They report a very short lifetime on nisin activity recovered from the raw meat (half-life of less than one day).

M. Doyle in Food Technol. 1988 42: (4) 169-171, describes the inhibitory effects of nisin on the growth and survival of L. monocytogenes.

United States patent 4,597,972 discloses the mixing of food products with high levels of nisin to inhibit botulinum spore growth.

European Patent Application, EP 0 384 319, discloses the use of antimicrobial composition comprising a Streptococcus-derived bacteriocin such as nisin, a Pediococcus-derived bacteriocin or a synthetic equivalent antibacterial agent in combination with a chelating agent(s). The composition may be used in conjunction with a foodstuff or with a food packaging film (with or without the chelating agent) to protect foodstuffs against growth of harmful bacteria such as Listeria.

### Summary of the Invention

The present invention involves the application of a lanthionine bacteriocin to the surface of heat-processed foods such as cooked meats, fish, shrimp, lobster, shell fish and minimally processed meals in order to control post-processing contamination thereof.

### Description of the Invention

The problem addressed by this invention is the surface contamination of heat-processed food products, especially meats, e.g. frankfurters, deli-meats (also referred to as cold cuts), cook-in-bag roast beef, chicken and cooked shrimp with undesirable bacteria, in particular Listeria monocytogenes. It has been discovered that L. monocytogenes on the surface of heat-processed foods such as frankfurters can be reduced or eliminated by applying a lanthionine bacteriocin such as nisin, subtilin, epidermin or Pep 5. to the surface thereof such as by dipping, spray coating or other surface application techniques. This surface application of such lanthionines results in a rapid reduction in L. monocytogenes cell numbers, and results in a continuation of such reduction for several weeks. Accordingly, it has been discovered that surface applications of nisin, subtilin, epidermin, Pep 5 or other lanthionine bacteriocin can be used after the heat treatment in the production of heat-processed meat products to control L. monocytogenes and other lanthionine bacteriocin sensitive food borne pathogens and spoilage organisms.

Referring back to the Chung article which describes the dip treatment of raw meat, one is led to the conclusion that nisin is of limited utility in the treatment of uncooked meat products and even that utility which is exhibited has a short lifetime. The present invention calls for the surface application of one or more lanthionine bacteriocins to a heat processed meat product after the heating step. It has been discovered that the treatment of processed meats such as frankfurters in this manner results in a significant reduction in the levels of contamination L. monocytogenes within 30 minutes of such treatment and that the levels continue to decline for at least three weeks. This is in contrast to the published examples in which the effectiveness of nisin is of only a very short duration.

Other heat-processed food products which are minimally processed such as fish, shrimp, shell fish and meats, poultry and meals which are cooked, for example poached, blanched or boiled, for sale chilled or for later serving chilled, would also benefit from surface treatment with a lantibiotic such as nisin after such processing. These foods are not retorted and the manner of sale and later use provides a surface exposed to post-processing contamination. The outgrowth of bacterial contamination may be inhibited or eliminated by the surface treatment disclosed herein. In addition, mixed foods such as salads for example pasta salads and meals containing such heat treated but minimally processed food products may also be surface treated.

Surface treatment may be accomplished by dipping or spraying the food product with the lantibiotic solution. Nisin is particularly preferred and may be used in a surface treatment solution which contains from 0.1 to 1,000,000 units per mL, preferably from 500 to 200,000 units per mL.

A preferred embodiment of the invention involves the surface treatment of a heat-processed food product with nisin in the absence of any significant amount of a chelating agent such as citric acid.

The method of practicing the present invention is further illustrated by the following examples in which the nisin units were determined by the method of Tramer and Fowler reported in J. Sci. Fd. Agric., 1964 Vol.

15, 522-528.

Example 1

Effect of Nisin on the Survival of L. monocytogenes on Frankfurters.

An overnight culture [1% inoculum, grown at 35°C in BHI (brain heart infusion) medium from Difco] of L. monocytogenes Scott A was diluted 1:100 in 25 mM citrate buffer pH 6.0 (Buffer). A 1.5 mL portion of the diluted cells was transferred to 1.5 liters of Buffer in a sterile tub for inoculation the frankfurters which were dipped for 15 seconds in the inoculum, drained a few seconds, and dipped in triplicate into treatment solutions containing nisin at the indicated concentrations in 50 mL Buffer pH 6. At each condition, 6 frankfurters (two series of three each) were treated. The three frankfurters from a single treatment were vacuum packed in a sterile stomacher bag and stored for 30 minutes at room temperature. Packages were opened and each frankfurter was transferred to an individual stomacher bag. There was added 205 mL Modified Listeria Enrichment Medium (UVM) from BBL to the bag and the frankfurters were stomached for 2 minutes.

The stomached material (10 mL) was transferred to each of 3 empty, sterile 20 x 150 mm tubes, 1 mL of this material was transferred to each of 3 tubes containing 9 mL UVM medium and to one tube containing 9 mL phosphate buffered saline (PBS) at pH 7.0. One mL of the 10 fold diluted material was transferred to each of 3 tubes containing 9 mL UVM medium and to one tube containing 9 mL PBS. One mL of the 100 fold diluted material was transferred to each of 3 tubes containing 9 mL UVM medium (i.e. a 3-tube most probable number procedure (MPN) was used with 10, 1, 0.1 and 0.01 mL stomached frankfurter in each set of tubes). The remainder of the sample was split into 4 volumes of about 70 mL each in sterile 25 x 200 mm tubes. All tubes were incubated at 35°C for 24 hours to enrich any L. monocytogenes. To detect L. monocytogenes, a 0.1 mL portion from each UVM tube was transferred to a tube containing 9 mL Fraser's broth and incubated 46 hours at 35°C. Positive tubes were detected by darkening of the medium, and viable cell number per frankfurter were determined from a 3-place MPN table. The results of this procedure are shown in Table 1.

## TABLE 1

### Effect of Nisin on *Listeria monocytogenes* on Frankfurters Stored 30 Minutes

| Nisin Concentration (Units/ml) | Average Surviving Cell Number per Frank (by MPN Analysis) |
|---|---|
| 0 | 794 |
| 2000 | 130 |
| 4000 | 44 |
| 8000 | 25 |
| 16000 | 14 |
| 32000 | 4.7 |
| 64000 | 2.3 |

From the data of Table 1, it can be determined that a dip treatment with nisin followed by packaging and storage for 30 minutes of frankfurters inoculated with L. monocytogenes resulted in a decrease in the number of surviving cells and that this decrease is dependent on the concentration of nisin.

Example 2

Effect of Nisin Against L. monocytogenes on Frankfurters Stored at 4°C for 21 Days.

Frankfurters were treated as described above and the treated, vacuum packed franks stored for up to 21

EP 0 453 972 B1

days at 4°C. As shown in Table 2, the cell count of L. monocytogenes per frankfurter was greatly reduced and either continued to decrease (5,000 units/mL nisin) or remained extremely low (10,000 or 20,000 units/mL nisin) for at least 21 days.

## Table 2

**Effect of Nisin on *Listeria monocytogenes* on Frankfurters Stored up to 21 Days at 4°C**

| Storage Time | Concentration of Nisin (Units per ml) in Treatment Solution | | | |
|---|---|---|---|---|
| (Days) at 4°C | 0 | 5000 | 10,000 | 20,000 |
| 0 | 1050 | (1050) | (1050) | (1050) |
| 9 | 1041 | 8 | 6 | 7 |
| 15 | >6000 | 4 | 1 | 1 |
| 21 | >600,000 | 2 | 1 | 1 |

**Average Surviving Cell Number per Frank (By MPN Analysis)**

Day 0 data for 5000, 10,000 and 20,000 units/ml nisin was not directly determined. The "(1050)" data reflects the average original inoculum level of all franks in the experiment.

These data are in direct contrast to published reports on raw meat where dipping it in a solution containing 10,000 units per mL nisin produced no additional reduction in cell number after its immediate effect and where the outgrowth of L. monocytogenes began within 2 weeks.

## Claims

1. A method of controlling the contamination of a heat-processed food by undesirable microorganisms which method involves treating the surface of a processed food with a lanthionine bacteriocin after the food product has been heat treated.

2. The method of claim 1 in which the heat-processed food is a heat-processed meat product.

3. The method of claim 2 in which the meat product is a frankfurter.

4. The method of claim 2 in which the meat product is chosen from the group consisting of deli-meats and cook-in-bag roast beef, chicken and meals.

5. The method of claim 1 in which the heat-processed food is a minimally processed food.

6. The method of claim 5 in which the minimally processed food is chosen from the group consisting of shrimp, lobster and shell fish.

7. The method of claim 1 in which the processed food is a salad containing such heat-processed food products.

8. The method of claim 1 wherein the processed food is treated by dipping it into an solution of the lanthionine bacteriocin.

9. The method of claim 8 wherein the solution contains from 0.1 to 1,000,000 units per mL.

10. The method of claim 9 wherein the solution contains from 500 to 200,000 units per mL.

11. The method of claim 1 wherein the lanthionine bacteriocin is nisin, subtilin, epidermin or Pep 5.

12. The method of claim 1 wherein the lanthionine bacteriocin is nisin.

4

13. A method of treating frankfurters which comprises contacting the surface of a heat treated frankfurter with an aqueous solution of a lanthionine bacteriocin to thereby render the frankfurter resistant to contamination by L. <u>monocytogenes</u>.

14. The method of claim 12 wherein the lanthionine bacteriocin is nisin.


**Patentansprüche**

1. Verfahren zur Bekämpfung der Verunreinigung eines wärmebehandelten Nahrungsmittels durch unerwünschte Mikroorganismen, umfassend das Behandeln der Oberfläche eines verarbeiteten Nahrungsmittels mit einem Lanthionin-Bacteriocin, nachdem das Nahrungsmittelerzeugnis wärmebehandelt worden ist.

2. Verfahren nach Anspruch 1, worin das wärmebehandelte Nahrungsmittel ein wärmebehandeltes Fleischerzeugnis ist.

3. Verfahren nach Anspruch 2, worin das Fleischerzeugnis ein Frankfurter Würstchen ist.

4. Verfahren nach Anspruch 2, worin das Fleischerzeugnis aus der aus verzehrfertigen Fleischspeisen sowie Roastbeef, Geflügel und Mahlzeiten im Brat- bzw. Kochbeutel bestehenden Gruppe ausgewählt ist.

5. Verfahren nach Anspruch 1, worin das wärmebehandelte Nahrungsmittel ein minimal behandeltes Nahrungsmittel ist.

6. Verfahren nach Anspruch 5, worin das minimal behandelte Nahrungsmittel aus der aus Garnelen, Hummer und Schalentieren bestehenden Gruppe ausgewählt ist.

7. Verfahren nach Anspruch 1, worin das verarbeitete Nahrungsmittel ein solche wärmebehandelten Nahrungsmittel enthaltender Salat ist.

8. Verfahren nach Anspruch 1, worin das verarbeitete Nahrungsmittel durch Eintauchen desselben in eine Lösung des Lanthionin-Bacteriocins behandelt wird.

9. Verfahren nach Anspruch 8, worin die Lösung 0,1 bis 1 000 000 Einheiten pro 1 ml enthält.

10. Verfahren nach Anspruch 9, worin die Lösung 500 bis 200 000 Einheiten pro 1 ml enthält.

11. Verfahren nach Anspruch 1, worin das Lanthionin-Bacteriocin Nisin, Subtilin, Epidermin oder Pep 5 ist.

12. Verfahren nach Anspruch 1, worin das Lanthionin-Bacteriocin Nisin ist.

13. Verfahren zur Behandlung von Frankfurter Würstchen, umfassend das In-Berührung-Bringen der Oberfläche eines wärmebehandelten Frankfurter Würstchens mit einer wäßrigen Lösung eines Lanthionin-Bacteriocins, um dadurch das Frankfurter Würstchen gegen eine Verunreinigung durch *L. monocytogenes* resistent zu machen.

14. Verfahren nach Anspruch 13, worin das Lanthionin-Bacteriocin Nisin ist.


**Revendications**

1. Méthode de contrôle de la contamination de denrées alimentaires cuites par des micro-organismes indésirables, laquelle méthode comprend le traitement de surface d'une denrée alimentaire cuisinée avec une bactériocine de lanthionine après que le produit alimentaire a été cuit.

2. Méthode selon la revendication 1, dans laquelle la denrée alimentaire cuite est un produit carné cuit.

3. Méthode selon la revendication 2, dans laquelle le produit carné est une saucisse de Francfort.

4.  Méthode selon la revendication 2, dans laquelle le produit carné est choisi parmi le groupe constitué par des charcuteries et le boeuf rôti, le poulet et les repas cuisinés préemballés.

5.  Méthode selon la revendication 1, dans laquelle la denrée alimentaire cuite est une denrée alimentaire en partie cuisinée.

6.  Méthode selon la revendication 5, dans laquelle la denrée alimentaire en partie cuisinée est choisie parmi le groupe constitué par les crevettes, les homards et les coquillages.

7.  Méthode selon la revendication 1, dans laquelle la denrée alimentaire cuisinée est une salade contenant de tels produits alimentaires cuits.

8.  Méthode selon la revendication 1, dans laquelle la denrée alimentaire cuisinée est traitée par immersion dans une solution de bactériocine de lanthionine.

9.  Méthode selon la revendication 8, dans laquelle la solution contient de 0,1 à 1 000 000 d'unités par ml.

10. Méthode selon la revendication 9, dans laquelle la solution contient de 500 à 200 000 unités par ml.

11. Méthode selon la revendication 1, dans laquelle la bactériocine de lanthionine est la nisine, la subtiline, l'épidermine ou Pep 5.

12. Méthode selon la revendication 1, dans laquelle la bactériocine de lanthionine est la nisine.

13. Méthode de traitement des saucisses de Francfort qui comprend la mise en contact de la surface d'une saucisse de Francfort cuite avec une solution aqueuse de bactériocine de lanthionine pour rendre ainsi la saucisse de Francfort résistante à la contamination par L. monocytogenes.

14. Méthode selon la revendication 13, dans laquelle la bactériocine de lanthionine est la nisine.